# EUROPÄISCHE PATENTSCHRIFT

(11) **EP 1 277 259 B1**
(45) Veröffentlichungstag und Bekanntmachung des Hinweises auf die Patenterteilung: **25.02.2009**
(21) Anmeldenummer: 01940109.0
(22) Anmeldetag: 27.03.2001
(51) Int. Cl.: H02B 11/133, H02B 1/20

(54) **SCHALTFELD FÜR LEISTUNSSCHALTER MIT EINEM GERÄTERAUM UND EINEM KABELANSCHLUSSRAUM**
SWITCHPANEL FOR CIRCUIT BREAKERS, WITH A DEVICE COMPARTMENT AND A CABLE TERMINAL COMPARTMENT
TABLEAU DE DISTRIBUTION POUR DISJONCTEURS COMPORTANT UN COMPARTIMENT D'APPAREIL ET UN COMPARTIMENT DE RACCORD DE CABLES

(30) Priorität: 26.04.2000 DE 10021275
(43) Veröffentlichungstag der Anmeldung: 22.01.2003
(73) Patentinhaber: SIEMENS AKTIENGESELLSCHAFT, 80333 München (DE)
(72) Erfinder: KLAUS, Matthias, 06888 Zoernigall (DE); SCHMIDT, Mario, 04430 Leipzig (DE)
(86) Internationale Anmeldenummer: PCT/DE2001/001210
(87) Internationale Veröffentlichungsnummer: WO 2001/082433

(56) Entgegenhaltungen:
- EP-A- 0 668 644
- US-A- 5 055 059

## Beschreibung

Die Erfindung betrifft ein elektrisches Schaltfeld mit vertikal übereinander in einem Geräteraum angeordneten und mit einem Sammelschienensystem verbindbaren Leistungsschaltern sowie mit einem an den frontseitig zugänglichen Geräteraum seitlich angrenzenden und gleichfalls frontseitig zugänglichen Kabelanschlussraum zur Verbindung jedes Poles jedes der Leistungsschalter mit mehreren zu Verbrauchern führenden Kabeln.

Ein Schaltfeld der genannten Art ist beispielsweise durch die EP 0 668 644 A1 bekannt geworden. Die Anschlussklemmen der Leitungsschalter sind hierbei durch ein System von winkelförmigen Verbindungsschienen mit Kabelklemmplatten verbunden. Jedem Pol eines Leistungsschalters ist dabei eine solche Kabelklemmplatte zugeordnet, die mehrere Klemmstellen für abgehende Kabel besitzt. Die Kabelklemmplatten sind, in der Tiefenstreckung des Kabelanschlussraumes betrachtet, hintereinander angeordnet und weisen zur Front des Schaltfeldes parallele Klemmflächen auf.

Die beschriebene Anordnung von Kabelklemmplatten erlaubt zwar die bei Leistungsschaltern für hohe Bemessungsströme erforderliche Verbindung mit mehreren Kabel bzw. Kabeladern je Pol, erfordert aber ein hohes Maß an Planung und Sorgfalt beim Anschluss der Kabel. Diese Anforderungen beruhen darauf, dass die Klemmstellen der hintereinander liegenden Kabel-klemmplatten - von der Front des Schaltfeldes betrachtet-miteinander fluchten und somit Handhabung, Sichtbarkeit und Prüfung eingeschränkt sind. Ferner ist bei Belegung der Kabelklemmplatten mit der vollen möglichen Zahl von Kabeln bzw. Kabeladern eine gegenseitige Spreizung erforderlich, die eine entsprechend Breite des Kabelanschlussraumes erfordert. Dies steht der meistens erhobenen Forderungen nach einer möglichst geringen Breite der Schaltfelder entgegen.

Der Erfindung liegt hiervon ausgehend die Aufgabe zugrunde, eine Bauform von Schaltfeldern für mehrere übereinander angeordnete Leistungsschalter mit einem verhältnismäßig schmalen Kabelanschlussraum zu schaffen, in dem eine große Anzahl von Kabeln bei guter Zugänglichkeit und späterer Prüfbarkeit der Klemmstellen angeschlossen werden kann.

Gemäß der Erfindung wird diese Aufgabe dadurch gelöst, dass für jeden Pol jedes der Leistungsschalter eine in der Tiefenerstreckung des Kabelanschlussraumes verlaufend angeordnete Kabelanschlussschiene mit Klemmflächen für mehrere Kabel bzw. Kabeladern enthält, wobei die Kabelanschlussschienen vertikal übereinander angeordnet sind.

Die Anschlussanordnung nach der Erfindung zeichnet sich durch große Übersichtlichkeit aus, da jeweils alle zu einem Pol gehörenden Kabel bzw. Kabeladern parallel zueinander in der Tiefe des Kabelanschlussraumes aufeinanderfolgend an einer der Kabelanschlussschienen befestigt sind. Dies erleichtert auch die Zubereitung der Kabelenden, die alle gleich lang sind. Ferner ermöglichen die Kabelanschlussschienen aufgrund ihrer Erstreckung in der Tiefe des Kabelanschlussraumes den Anschluss einer größeren Anzahl von Kabeln bzw. Kabeladern als die bekannten Kabelklemmplatten (EP 0 668 644 A1).

Es ist bereits ein Schaltfeld bekannt, das einen fronseitigen Geräteraum und einen gleichfalls frontseitig zugänglichen, seitlich neben dem Geräteraum angeordneten Kabelanschlussraum besitzen, in welchem mehrere Kabel bzw. Kabeladern angeschlossen werden können (US 5,055,059 A). Ein winkelförmiger Anschlussbaustein enthält alle Leiter, die zur Überleitung der nebeneinander liegenden Klemmstellen eines Schaltgerätes zu gestaffelt hintereinander liegenden Klemmstellen im Kabelanschlussraum benötigt werden. Die gestaffelte Anordnung ermöglicht dabei eine relativ gute Zugänglichkeit der Klemmstellen, was aber eine entsprechend größere Breite des Kabelanschlussraumes erfordert. Dabei ist allerdings keine Möglichkeit vorgesehen, mehr als ein Kabel bzw. mehr als eine Kabelader mit jedem der Pole zu verbinden.

Wie schon erwähnt, wird durch die Erfindung der Anschluss mehrerer Kabel bzw. einer entsprechenden Anzahl von Kabeladern je Pol eines Leistungsschalters erleichtert. Dennoch stellt die Herstellung aller benötigten Anschlüsse eine handwerklich anspruchsvolle Aufgabe dar. In dieser Hinsicht wird durch eine Weiterbildung der Erfindung eine weitere Erleichterung dadurch geschaffen, dass zumindest einige der Kabelanschlussschienen derart geneigt angeordnet sind, dass ihre Klemmflächen winklig zu einer vertikalen Raumachse des Kabelanschlussraumes stehen. Hierbei wird die Lage der Klemmflächen etwa einem sich aufgrund der räumlichen Gegebenheiten ergebenden Richtung der Kabelenden angenähert, was den Anschluss wesentlich erleichtert.

Eine zugleich mechanisch stabile und zweckmäßige Bauform der Kabelanschlussschienen kann nach einer Weiterbildung der Erfindung so beschaffen sein, dass die Kabelanschlussschienen bügelförmig mit abgewinkelten Enden gestaltet sind und dass die Enden zur Abstützung und/oder Befestigung an Verbindungsschienen bzw. Stützgliedern dienen.

Zu einer günstigen Raumausnutzung innerhalb des Volumens des Schaltfeldes kann dadurch beigetragen werden, dass nach einer weiteren Ausgestaltung der Erfindung die Kabelanschlussschienen an der dem Geräteraum zugewandten Seite des Kabelanschlussraumes angeordnet sind. Gleichfalls kann hierzu dadurch beigetragen werden, dass die im Kabelanschlussraum befindlichen Kabelanschlussschienen mit einer zum jeweils zugehörigen Leistungsschalter führenden Verbindungsschiene verbunden sind und dass die Klemmflächen teils auf der einen Seite und teils auf der anderen Seite der Verbindungsstelle gelegen sind. Zugleich wird hierdurch die Stromverteilung in der Weise verbessert, dass die Kabelanschlussschiene einen etwas geringeren Querschnitt erhalten kann. Diese Anordnung kann vorteilhaft in der Weise verwirklicht werden, dass die Verbindungsstelle an einem der abgewinkelten Enden der Kabelanschlussschiene angeordnet ist und dass an der gleichen Verbindungsstelle eine zusätzliche, nach der entgegengesetzten Seite weisende Kabelschlussschiene befestigt ist.

Schaltfelder mit Leistungsschaltern werden häufig so ausgerüstet, dass nicht nur eine Bedienung der Leistungsschalter vor Ort, sondern auch durch Fernsteuerung möglich ist. Hierzu sind die Leistungsschalter mit einer Schaltwarte durch entsprechende Steuerleitungen zu verbinden. Die zu den Leistungsschaltern gehörenden Geräte und Anschlussmittel können im Rahmen der Erfindung in besonders vorteilhafter Weise dadurch untergebracht werden, dass die Kabelanschlussschienen gegenüber einer Zugangsöffnung des Kabelanschlussraumes zurückgesetzt angeordnet sind und dass zwischen den Kabelanschlussschienen und der Zugangsöffnung wenigstens ein Geräteträger zur wahlweisen Unterbringung von Schalt-, Steuer- und Anzeigegräten angeordnet ist. In bekannter Weise kann ein solcher Geräteträger auch bewegbar in der Weise ausgebildet sein, dass bei Bedarf der dahinter liegende Kabelanschlussraum mit den Kabelanschlussschienen einsehbar und zugänglich ist.

Die Erfindung wird im Folgenden anhand des in den Figuren dargestellten Ausführungsbeispieles näher erläutert.

Die Figur 1 zeigt ein Schaltfeld einer Niederspannungs-Schaltanlage in einer Seitenansicht mit Blickrichtung auf einen Kabelanschlussraum.

In der Figur 2 ist das Schaltfeld gemäß der Figur 1 von vorn mit teilweise aufgebrochen gezeigter Front sowie mit gleichfalls mit sichtbarem Kabelanschlussraum, dargestellt.

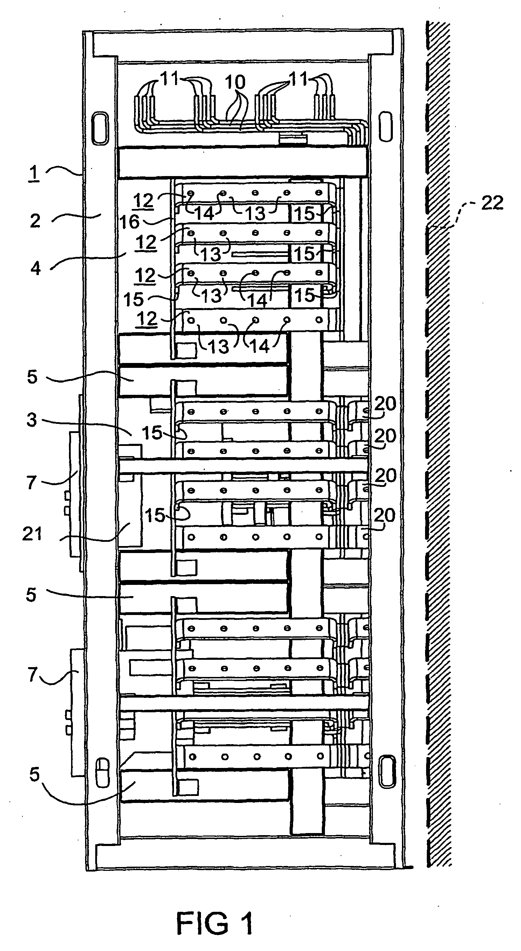

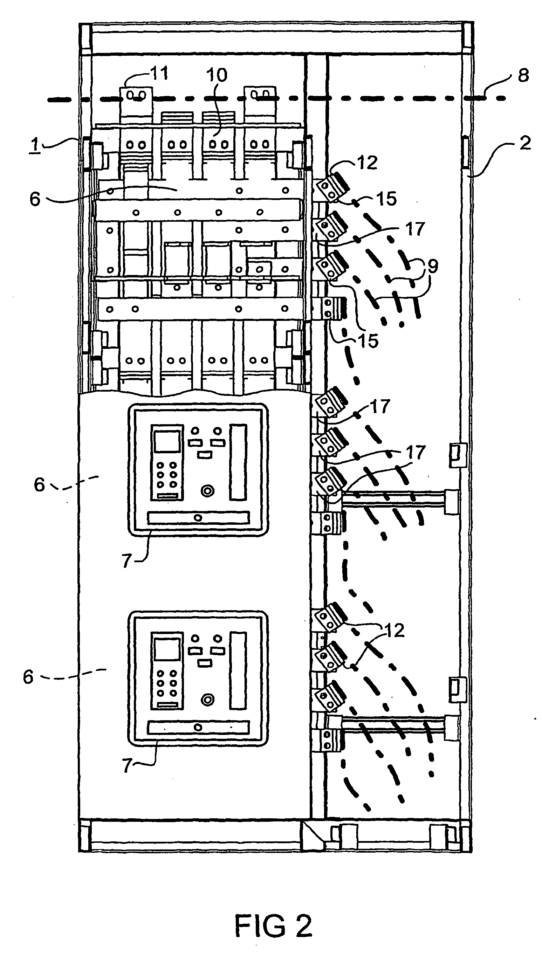

Das in den Figuren 1 und 2 gezeigte Schaltfeld 1 weist in bekannter Weise ein Gerüst 2 auf, welches in einem Geräteraum 3 und einen Kabelanschlussraum 4 unterteilt ist, wie dies anhand der Figur 2 zu erkennen ist. Der Geräteraum 3 ist seinerseits durch Zwischenböden 5 (Fig. 1) in drei vertikal übereinander angeordnete Kammern 6 (Fig. 2) zur Aufnahme je eines Leistungsschalters 7 unterteilt. Die oberste der Kammern 6 ist ohne einen solchen Leistungsschalter dargestellt.

Die übereinander angeordneten Kammern 6 erstrecken sich in bekannter Weise nicht über die gesamte Höhe des Gerüstes 2, sondern sind so bemessen, dass unterhalb der unteren Kammer 6 ein Raum zur Verlegung einer Schutzleiterschiene und oberhalb der obersten Kammer 6 ein Raum für ein Sammelschienensystem 8 verbleibt. Das in der Fig. 2 vereinfacht als hervorgehobene strichpunktierte Linie angedeutete Sammelschienensystem 8 ist mit den Leistungsschaltern 7 durch Verteilungsschienen 10 mit Anschlussenden 11 verbunden. Die Verteilungsschienen 10 sind an der Rückseite des Schaltfeldes 1 hinter dem Geräteraum 3 angeordnet. Insgesamt sind vier Sätze von Verteilungsschienen 10 in paralleler Anordnung vorhanden.

Seitlich neben dem Geräteraum 3 befindet sich der bereits erwähnte Kabelanschlussraum 4, der sich im Unterschied zu den Kammern 6 des Geräteraumes 3 über die gesamte Tiefe des Gerüstes 2 erstreckt. In dem Kabelanschlussraum 4 sind für jeden Pol jedes der vorgesehenen Leistungsschalter 7 und den zugehörigen Neutralleiter eine Kabelanschlussschiene 12 vorgesehen. Alle vorhandenen Kabelanschlussschienen 12 sind parallel zueinander und in der Tiefenerstreckung des Kabelanschlussraumes 4 verlaufend angeordnet, und zwar an der Seite, die dem Geräteraum 3 zugewandt ist. Jede dieser Kabelanschlussschienen 12 weist Klemmflächen 13 auf, deren Lage durch Befestigungsöffnungen 14 bestimmt sind. Entsprechend der vorgesehenen Anzahl von drei vertikal übereinander angeordneten Leistungsschaltern 7 enthält der Kabelanschlussraum 4 somit drei Sätze von je vier übereinander angeordneten Kabelanschlussschienen 12. Von diesen sind jeweils die den Phasenleitern zugeordneten Kabelanschlussschienen 12 derart geneigt angeordnet, dass ihre Klemmflächen 13 winklig zur vertikalen Raumachse des Kabelanschlussraumes 4 stehen. Die jeweils unterste Kabelanschlussschiene 12, die dem Neutralleiter zugeordnet ist, besitzt demgegenüber eine Position mit vertikalen Klemmflächen. Durch die geschilderte Anordnung entsteht ohne besondere Hilfsmittel ein gewünschter Abstand zwischen Kabeln 9, wenn diese mit den Kabelanschlussschienen 12 an den Klemmflächen 13 verbunden werden. Die Kabel 9 sind in der Figur 2 strichpunktiert angedeutet.

Wie bei einem Vergleich der Figuren 1 und 2 zu erkennen ist, sind die Kabelanschlussschienen 12 bügelförmig mit abgewinkelten Enden 15 gestaltet. Die frontseitigen Enden 15 der Kabelanschlussschienen 12 dienen dabei zur Abstützung an isolierenden Stützleisten 16, während die im Kabelanschlussraum 4 hinten gelegenen abgewinkelten Enden 15 mit Verbindungsschienen 17 verbunden sind, die zu den Leistungsschaltern 7 führen. Dadurch, dass die Kabelanschlussschienen 12 an der dem Geräteraum 3 zugewandten Seite des Kabelanschlussraumes 4 angeordnet sind, kann für die Verbindungsschienen 17 eine kurze, verlustarme Bauform gewählt werden.

In dem gezeigten Ausführungsbeispiel sind die Kabelanschlussschienen 12 mit ihren hinteren abgewinkelten Enden 15 an einer hierzu vorgesehenen Verbindungsstelle mit den Verbindungsschienen 17 verbunden. An der gleichen Verbindungsstelle sind jeweils zusätzliche, kürzer ausgebildete Kabelanschlussschienen 20 angebracht, um die Anzahl der verfügbaren Klemmflächen 13 zu vergrößern. Obwohl die zusätzlichen Kabelanschlussschienen 20 nur eine solche Klemmstelle 13 aufweisen, entlasten sie die Kabelanschlussschienen 12 um einen entsprechenden Anteil des zu führenden Stromes und gestatten daher eine entsprechende Verringerung des Querschnittes bzw. eine Verringerung der Verluste. Offensichtlich wäre es möglich, Kabelanschlussschienen zu wählen, welche die Gesamtzahl der in der Figur 1 erkennbaren Klemmflächen 13 aufweisen und die außermittig mit den Verbindungsschienen 17 verbunden sind. Demgegenüber ist das gezeigte Ausführungsbeispiel so gestaltet, dass eine Standardausführung der Kabelanschlussschienen 12 verwendet wird, die für die meisten Anwendungsfälle nach Querschnitt und Anzahl der Klemmflächen ausreicht. Nur in den Fällen, die zusätzliche Klemmflächen erfordern, werden zur Erfüllung dieser erhöhten Anforderungen die zusätzlichen Kabelanschlussschienen 20 eingesetzt.

Wie bereits erwähnt, können den Leistungsschaltern 7 periphere Geräte zugeordnet sein, die zusätzlich in dem Schaltfeld unterzubringen sind. Als Beispiel zeigt die Figur 1 einen hierfür vorgesehenen Geräteträger 21, der im Kabelanschlussraum 4 untergebracht. Der hierfür benötigte Raum wird dadurch bereitgestellt, dass die Kabelanschlussschienen 12 gegenüber einer frontseitigen Zugangsöffnung des Kabelanschlussraumes 4 zurückgesetzt angeordnet sind.

Wie man erkennt, kann das beschriebene Schaltfeld 1 oder eine Mehrzahl derartiger, miteinander verbundener Schaltfelder direkt vor einer Wand 22 aufgestellt werden, die in der Figur 1 gestrichelt angedeutet ist. In dieser Aufstellung sind sowohl der Geräteraum 3 als auch der Kabelanschlussraum 4 vom Bedienungsgang der Schaltanlage problemlos zugänglich.

## Patentansprüche

1. Elektrisches Schaltfeld (1) mit vertikal übereinander in einem Geräteraum (3) angeordneten und mit einem Sammelschienensystem (8) verbindbaren Leistungsschaltern (7) sowie mit einem an den frontseitig zugänglichen Geräteraum seitlich angrenzenden und gleichfalls frontseitig zugänglichen Kabelanschlussraum (4) zur Verbindung jedes Poles jedes der Leistungsschalter (7) mit mehreren zu Verbrauchern führenden Kabeln (9),
**dadurch gekennzeichnet,**
**dass** der Kabelanschlussraum (4) für jeden Pol jedes der Leistungsschalter (7) eine in der Tiefenerstreckung des Kabelanschlussraumes (4) verlaufend angeordnete Kabelanschlussschiene (12) mit Klemmflächen (13) für mehrere Kabel bzw. Kabeladern (9) enthält, wobei die Kabelanschlussschienen (12) vertikal übereinander angeordnet sind.

2. Elektrisches Schaltfeld nach Anspruch 1,
**dadurch gekennzeichnet,**
**dass** zumindest einige der Kabelanschlussschienen (12) derart geneigt angeordnet sind, dass ihre Klemmflächen (13) winklig zu einer vertikalen Raumachse des Kabelanschlussraumes (4) stehen.

3. Elektrisches Schaltfeld nach Anspruch 1 oder 2,
**dadurch gekennzeichnet ,**
**dass** die Kabelanschlussschienen (12) bügelförmig mit abgewinkelten Enden (15) gestaltet sind und dass die Enden (15) zur Abstützung und/oder Befestigung an Verbindungsschienen (17) bzw. Stützleisten (16) dienen.

4. Elektrisches Schaltfeld nach Anspruch 1 oder 2,
**dadurch gekennzeichnet,**
**dass** die Kabelanschlussschienen (12) an der dem Geräteraum (3) zugewandten Seite des Kabelanschlussraumes (3) angeordnet sind.

5. Elektrisches Schaltfeld nach einem der vorangehenden Ansprüche,
**dadurch gekennzeichnet ,**
**dass** die im Kabelanschlussraum (4) befindlichen Kabelanschlussschienen (12) mit einer zum jeweils zugehörigen Leistungsschalter (7) führenden Verbindungsschiene (17) verbunden sind und dass die Klemmflächen (13) teils auf der einen Seite und teils auf der anderen Seite der Verbindungsstelle gelegen sind.

6. Elektrisches Schaltfeld nach Anspruch 5,
**dadurch gekennzeichnet,**
**dass** die Verbindungsstelle an einem der abgewinkelten Enden (15) der Kabelanschlussschiene (12) angeordnet ist und dass an der gleichen Verbindungsstelle eine zusätzliche, nach der entgegengesetzten Seite weisende Kabelschlussschiene (20) befestigt ist.

7. Elektrisches Schaltfeld nach einem der vorangehenden Ansprüche,
**dadurch gekennzeichnet ,**
**dass** die Kabelanschlussschienen (12) gegenüber einer Zugangsöffnung des Kabelanschlussraumes (4) zurückgesetzt angeordnet sind und dass zwischen den Kabelanschlussschienen (12) und
der Zugangsöffnung wenigstens ein Geräteträger (21) zur wahlweisen Unterbringung von Schalt-, Steuer- und Anzeigegeräten angeordnet ist.

## Claims

1. Electrical switchpanel (1) with circuit breakers (7), which are arranged vertically one above the other in a device compartment (3) and can be connected to a busbar system (8), and with a cable connection compartment (4), which laterally adjoins the device compartment, which is accessible from the front-panel side, and is likewise accessible from the front-panel side, for connecting each pole of each of the circuit breakers (7) to a plurality of cables (9) leading to loads, **characterized in that** the cable connection compartment (4) contains, for each pole of each of the circuit breakers (7), a cable connection rail (12), which is arranged so as to run in the depth extent of the cable connection compartment (4), with clamping faces (13) for a plurality of cables or cable cores (9), the cable connection rails (12) being arranged vertically one above the other.

2. Electrical switchpanel according to Claim 1, **characterized in that** at least some of the cable connection rails (12) are arranged so as to be inclined in such a way that their clamping faces (13) are at an angle with respect to a vertical spatial axis of the cable connection compartment (4).

3. Electrical switchpanel according to Claim 1 or 2, **characterized in that** the cable connection rails (12) are in the form of brackets with bent-back ends (15), and **in that** the ends (15) are used for supporting and/or fastening on connecting rails (17) or supporting strips (16).

4. Electrical switchpanel according to Claim 1 or 2, **characterized in that** the cable connection rails (12) are arranged on that side of the cable connection compartment (3) which faces the device compartment (3).

5. Electrical switchpanel according to one of the preceding claims, **characterized in that** the cable connection rails (12) located in the cable connection compartment (4) are connected to a connecting rail (17), which leads to the respectively associated circuit breaker (7), and **in that** the clamping faces (13) are positioned partially one side and partially on the other side of the connecting point.

6. Electrical switchpanel according to Claim 5, **characterized in that** the connecting point is arranged on one of the bent-back ends (15) of the cable connection rail (12), and **in that** an additional cable connection rail (20), which points towards the opposite side, is fastened on the same connecting point.

7. Electrical switchpanel according to one of the preceding claims, **characterized in that** the cable connection rails (12) are arranged set back with respect to an access opening of the cable connection compartment (4), and **in that** at least one device mount (21) for selectively accommodating switching, control and display devices is arranged between the cable connection rails (12) and the access opening.

## Revendications

1. Tableau (1) de distribution électrique comprenant des disjoncteurs (7) disposés verticalement les uns sur les autres dans une chambre (3) d'appareil et pouvant être reliés par un système (8) de barre collecteur ainsi qu'une chambre (4) de raccordement de câble, voisine latéralement de la chambre d'appareil accessible du côté avant et accessible également du côté avant pour relier chaque pôle de chacun des disjoncteurs (7) à plusieurs câbles (9) menant à des consommateurs,
**caractérisé**
**en ce que** la chambre (4) de raccordement de câble contient pour chaque pôle de chacun des disjoncteurs (7) une barre (12) de raccordement de câbles, disposée dans l'étendue profonde de la chambre (4) de raccordement de câbles et ayant des surfaces (13) de bornes pour plusieurs câbles ou brins (9) de câble, les barres (12) de raccordement de câbles étant disposées les uns sur les autres et verticalement.

2. Tableau de distribution électrique suivant la revendication 1,
**caractérisé**
**en ce qu'**au moins certaines des barres (12) de raccordement de câbles sont inclinées de façon à ce que leurs surfaces (13) de borne fassent un angle avec l'axe vertical de la chambre (4) de raccordement de câbles.

3. Tableau de distribution électrique suivant la revendication 1 ou 2,
**caractérisé**
**en ce que** les barres (12) de raccordement de câbles sont en forme d'étrier en ayant des extrémités (15) coudées et en ce que les extrémités (15) servent à l'appui et/ou à la fixation sur des barres (17) de liaison ou des barrettes (16) d'appui.

4. Tableau de distribution électrique suivant la revendication 1 ou 2,
**caractérisé**
**en ce que** les barres (12) de raccordement de câbles sont disposées du côté de la chambre (3) de raccordement de câbles tourné vers la chambre (3) d'appareil.

5. Tableau de distribution électrique suivant l'une des revendications précédentes,
**caractérisé**
**en ce que** les barres (12) de raccordement de câbles se trouvant dans la chambre (4) de raccordement de câbles sont reliées à une barre (17) de liaison menant au disjoncteur (7) associé respectif et en ce que les surfaces (13) de borne sont mises en partie d'un côté et en partie de l'autre côté du point de liaison.

6. Tableau de distribution électrique suivant la revendication 5,
**caractérisé**
**en ce que** le point de liaison est disposé à l'une des extrémités (15) coudées de la barre (12) de raccordement de câbles et en ce qu'au même point de liaison est fixée une barre (20) de fin de câble supplémentaire, tournée vers le côté opposé.

7. Tableau de distribution électrique suivant l'une des revendications précédentes,
**caractérisé**
**en ce que** les barres (12) de raccordement de câbles sont disposées en retrait par rapport aux ouvertures d'accès de la chambre (4) de raccordement de câbles et en ce qu'entre les barres (12) de raccordement de câbles et l'ouverture d'accès est disposé au moins un porte-appareil (21) pour loger au choix des appareils de commutation, de commande et d'affichage.
